# EUROPEAN PATENT APPLICATION

(11) **EP 2 671 742 A1**
(43) Date of publication of application: **11.12.2013**
(21) Application number: 12758306.0
(22) Date of filing: 06.03.2012
(51) Int. Cl.: B60J 1/10

(54) **ATTACHMENT STRUCTURE FOR WINDOW GLASS**

(30) Priority: 11.03.2011 JP 2011053933
(71) Applicant: Central Glass Company, Limited, Yamaguchi 755-0001 (JP)
(72) Inventor: NISHIKAWA, Shinji, (JP)
(74) Representative: Manitz, Finsterwald & Partner GbR
(86) International application number: PCT/JP2012/055607
(87) International publication number: WO 2012/124532

(57) **Abstract**

In a structure for attaching a window glass to a window frame portion of a vehicle, an adhesive-flow-blocking member is provided between a resin mold attached to an end edge portion of the window glass, and an adhesive that bonds the window glass to a body of the vehicle. Moreover, the resin mold and the window glass are fixed to each other through an elastic sheet. This structure can prevent a damage of the resin mold.

## Description

### TECHNICAL FIELD

The present invention relates to a structure for attaching a window glass equipped with a resin mold to a window frame of vehicle.

### BACKGROUND OF INVENTION

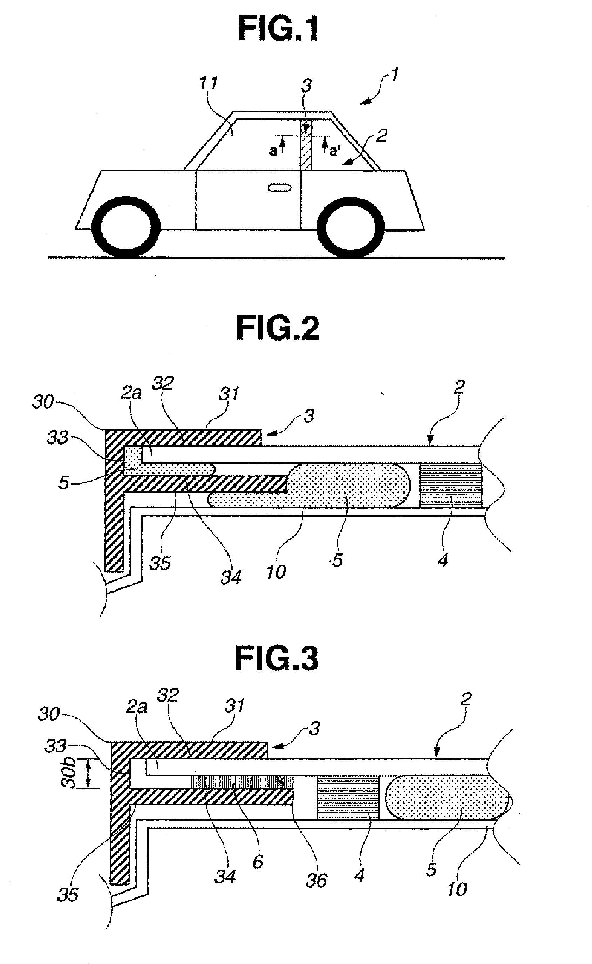

In a case that a set-in-type (fit-in-type) side window glass is provided in a side (lateral) portion of an automobile, a resin mold (mold formed of resin) is sometimes mounted at a front edge of the side window glass as shown in FIG. 1.

Previously, a state where the side window glass equipped with the resin mold has been attached to a side window frame of the vehicle has been as shown in FIG. 2. In the structure of FIG. 2, the resin mold is mounted at an end edge portion of the side window glass and is fixed to the end edge portion of the side window glass by means of adhesive (bonding agent) or double-faced adhesive tape. Moreover, a dam rubber is made to stick to the side window glass along the end edge portion of the side window glass, and then, an adhesive for bonding the side window glass to a body of the vehicle is applied between the mold and the dam rubber.

By such a structure, the adhesive which bonds the side window glass to the vehicle body is blocked by the dam rubber, so that the adhesive can be prevented from overflowing toward a transparent region of the side window glass which is located opposite to the end edge portion of the side window glass.

### SUMMARY OF INVENTION

However, in the case that the adhesive (bonding agent) for bonding the side window glass to the vehicle body is applied between the resin mold and the dam rubber when the side window glass equipped with the resin mold is attached to the window frame, there is a possibility that the adhesive flows toward the resin mold and adheres to the resin mold at the time of attachment of the side window glass as shown in FIG. 2. Accordingly, a crack of the resin mold is sometimes caused by a brittle fracture called "chemical stress cracking".

The chemical stress cracking is a phenomenon that is caused by an interaction between a component of chemical agent and a material of resin product in a case that the chemical agent has adhered to a portion of the resin product at which a tensile (stretching) stress is occurring. In the case of the chemical stress cracking of the above resin mold, as the tensile stress to the resin mold, a thermal stress caused due to a difference in thermal expansion coefficient between the resin mold and the side window glass and/or a stress caused due to a dimensional error in manufacturing at a bonding portion between the resin mold and the side window glass at the time of assembling of the resin mold and the side window glass are applied to the bonding portion between the resin mold and the side window glass. Moreover, as a highly-influential chemical agent that causes the chemical stress cracking in the resin mold, a plasticizer added to an urethane-series adhesive is known which is used as the adhesive for bonding the side window glass to the vehicle body.

Therefore, in order to prevent such a crack of the resin mold, it is necessary to relax the tensile stress which is caused in the resin mold or to form a structure in which the adhesive for bonding the side window glass to the vehicle body does not become in contact with the resin mold.

It is therefore an object of the present invention to provide an attachment structure for a window glass, devised to prevent the adhesive for bonding the side window glass to the vehicle body from adhering to the resin mold provided to the side window glass attached to the vehicle body and thereby to prevent the resin mold from cracking due to the chemical stress cracking.

According to the present invention, an attachment structure (a first aspect) for a window glass configured to be attached to a window frame portion of a vehicle includes an adhesive-flow-blocking member located between a resin mold attached to an end edge portion of the window glass, and an adhesive configured to bond the window glass to a body of the vehicle.

The first aspect may be more specified by an attachment structure (a second aspect) in which the adhesive-flow-blocking member is a dam rubber that also functions to retain a predetermined position of the window glass.

The first or second aspect may be more specified by an attachment structure (a third aspect) in which an elastic sheet is sandwiched between the resin mold and the end edge portion of the side window glass, and the resin mold and the end edge portion of the side window glass adhere to each other through the elastic sheet.

One of the first to third aspects may be more specified by an attachment structure (a fourth aspect) in which the elastic sheet is a double-faced adhesive tape.

### ADVANTAGEOUS EFFECTS OF INVENTION

According to the present invention, an adhesive-flow-blocking member such as the dam rubber is provided between the resin mold attached to the end edge portion of the side window glass and the adhesive that bonds the side window glass to the vehicle body. As a result, the adhesive was prevented from spreading and adhering to the resin mold and thereby incurring the crack of the resin mold by the chemical stress cracking.

### BRIEF EXPLANATION OF DRAWINGS

[FIG. 1] A side view of a passenger vehicle equipped with a side window glass to which a resin mold is attached.
[FIG. 2] A cross sectional view taken by a line a-a' of FIG. 1, showing an earlier comparative example regarding a positional relation among the resin mold and a dam rubber that are provided to the side window glass, and an adhesive for bonding the side window glass to a side window frame portion of vehicle body.
[FIG. 3] A cross sectional view taken by the line a-a' of FIG. 1, showing an embodiment according to the present invention regarding a positional relation among the resin mold and the dam rubber that are provided to the side window glass, and the adhesive for bonding the side window glass to the side window frame portion of vehicle body.

### DETAILED DESCRIPTION OF INVENTION

### <Positional relation among Resin mold, Dam rubber, and Adhesive for bonding window glass to vehicle body>

In an attachment structure for a window glass according to the present invention, a resin mold 3 is attached to a front edge of a side (lateral) window glass 2, as shown in FIG. 1. Moreover, an urethane-series adhesive (i.e., bonding agent) is applied onto an inside portion of the side window glass 2 along an end edge portion of the side window glass 2, so that the side window glass 2 is bonded to a side (lateral) window frame portion 10 of a vehicle 1 by means of the urethane-series adhesive.

A cross sectional view of the window-glass attachment structure according to the present invention is shown in FIG. 3. FIG. 3 shows a cross section taken by a line a-a' including the resin mold 3 and the side window glass 2 of FIG. 1.

As shown in FIG. 3, the resin mold 3 including a (angular-)U-shaped portion 30 is attached to the side window glass 2 to sandwich the front edge 2a of the side window glass 2 between the U-shaped portion 30. The adhesive 5 is put on a reverse surface of the side window glass 2 such that the side window glass 2 is bonded to the side window frame portion 10 of the vehicle 1. A dam rubber 4 functioning as an adhesive-flow-blocking member (damming member) is disposed between the adhesive 5 and the resin mold 3 such that a clearance is not produced between the side window frame portion 10 and the side window glass 2. Hence, even if the adhesive 5 is spread when the side window glass 2 is attached to the side window frame portion 10, the spreading flow of the adhesive 5 is blocked by the dam rubber 4. Accordingly, the adhesive 5 is prevented from adhering to the resin mold 3.

By such a structure, the adhesive 5 can be prevented from adhering to the resin mold 3. Two causes for the chemical stress cracking that occurs in the resin mold 3 are the adherence of the adhesive 5 to the resin mold 3 and the tensile stress (stretching stress) generated in the resin mold 3, as explained above. One of these two causes, that is, the adherence of the adhesive 5 to the resin mold 3 can be prevented. Thereby, the chemical stress cracking in the resin mold 3 can be prevented.

It is desirable that the dam rubber is provided between the resin mold 3 and the adhesive 5 as shown in FIG. 3. However, its purpose is to prevent the adhesive 5 from adhering to the resin mold 3, and hence, any member that produces no clearance between the side window glass 2 and the side window frame portion 10 may be provided to prevent the adhesive 5 from adhering to the resin mold 3. As such a member, an elastic member is more preferable because no clearance is produced between the elastic member and the reverse surface of the side window glass 2 and also between the elastic member and a surface of the side window frame portion 10 when the side window glass 2 is fitted to the side window frame portion 10.

In the case of FIG. 3, only one dam rubber 4 is provided between the resin mold 3 and the adhesive 5. However, another dam rubber may be additionally provided on a portion of the side window glass 2 which is located inside beyond the portion at which the adhesive 5 is applied. In such a case, the adhesive 5 can be prevented from leaking (escaping) from the side window frame portion 10 of the vehicle 1 toward an interior of the vehicle 1.

The dam rubber 4 is disposed between the resin mold 3 and the adhesive 5 in this embodiment according to the present invention, whereas the adhesive 5 is applied to the portion between the resin mold 3 and the dam rubber 4 in the earlier comparative example as shown by the cross sectional view of FIG. 2. Hence, normally in this embodiment, a larger area needs to be secured in the surface of the side window frame portion 10 in order to bond the side window glass 2 to the side window frame portion 10, as compared with the earlier comparative example of FIG. 2.

### <Adhesive joining between Resin mold and Window glass>

As shown in FIG. 3, the resin mold 3 is connected with the front edge 2a of the side window glass 2 by causing the reverse surface of the side window glass 2 to adhere to an inner surface 34 of a lower portion (as viewed in FIG. 3, i.e., one longitudinal straight portion) of the U-shaped portion of the resin mold 3 by means of double-faced adhesive tape (adhesive-double-coated tape) 6. A base portion of the double-faced adhesive tape 6 is constituted by an elastic sheet(s). Hence, the double-faced adhesive tape 6 absorbs a stress caused due to a dimensional error in manufacturing between the resin mold 3 and the side window glass 2 when the resin mold 3 is attached to the side window glass 2. Also, the double-faced adhesive tape 6 absorbs a dimensional difference caused due to a difference in thermal expansion coefficient between the resin mold 3 and the side window glass 2. A thermal stress that occurs in the earlier comparative example shown in FIG. 2 can be relieved in the case of this embodiment.

That is, since the double-faced adhesive tape whose base material is the elastic sheet is used for the adhesive joining between the resin mold 3 and the side window glass 2, the stress caused in the resin mold 3 can be eased. The two causes for the chemical stress cracking that occurs in the resin mold 3 are the adherence of the adhesive 5 to the resin mold 3 and the tensile stress generated in the resin mold 3, as explained above. Another of these two causes, that is, the tensile stress generated in the resin mold 3 can be relaxed. Thereby, the chemical stress cracking in the resin mold 3 can be prevented. In the example shown in FIG. 3, the double-faced adhesive tape 6 is used for the adhesive joining between the resin mold 3 and the side window glass 2. However, the double-faced adhesive tape 6 is not necessarily indispensable. The resin mold 3 and the side window glass 2 may be bonded to each other through some elastic sheet by sandwiching the elastic sheet between the resin mold 3 and the side window glass 2.

### <Method for attaching Side window glass to Side window frame portion>

A procedure for attaching the side window glass 2 to the side window frame portion 10 is as follows. The double-faced adhesive tape 6 is, in advance, stuck onto the reverse surface of the front edge 2a of the side window glass 2. Then, the front edge portion 2a of the side window glass 2 is inserted into the U-shaped portion 30 of the resin mold 3, and is made to adhere to the U-shaped portion 30 by means of pressure. Then, the dam rubber 4 is wound fully around the end edge portion of the side window glass 2 at a portion of the reverse surface of the side window glass 2 which is located inside beyond the resin mold 3, so that the dam rubber 4 is attached to the portion of the reverse surface of the side window glass 2 which is located inside beyond the resin mold 3. Moreover, the adhesive 5 is applied to a portion of the side window glass 2 which is located inside beyond the dam rubber 4, along an extending direction of the dam rubber 4.

Then, the side window glass 2 equipped with the resin mold 3, the dam rubber 4 and the adhesive 5 is attached to a predetermined portion of the side window frame portion 10 of the vehicle 1. At this time, the side window glass 2 is pressed to the side window frame portion 10, and thereby, the adhesive 5 is spread. However, since the dam rubber is arranged between the resin mold 3 and the adhesive 5, the adhesive 5 which is spreading under a state of maintaining its predetermined height does not reach the resin mold 3. Accordingly, the adhesive 5 can be prevented from adhering to the resin mold 3.

### <Operations of Present invention>

According to the present invention, for example, even if a large tensile stress is generated in the resin mold 3 when the resin mold 3 tries to largely contract due to a large thermal expansion coefficient of the resin mold 3 relative to a small thermal expansion coefficient of the side window glass 2 as a result of exposing the vehicle to a low-temperature environment of winter, the resin mold 3 can be prevented from cracking by the chemical stress cracking because the adhesive 5 has not adhered to the resin mold 3.

Furthermore, since the resin mold 3 is connected with the front edge portion 2a of the side window glass by means of adhesive joining of the double-faced adhesive tape 6, the dimensional difference caused due to the difference of thermal expansion coefficient between the resin mold 3 and the front edge portion 2a of the side window glass or due to the manufacturing error of the resin mold 3 and the side window glass 2 can be absorbed by an elasticity of the base material of the double-faced adhesive tape 6. Accordingly, the stress generated in the resin mold 3 can be relieved, so that the possibility of generating the chemical stress cracking in the resin mold 3 can be further reduced.

### <Example>

In the case of FIG. 3, an opening width 30b of the U-shaped portion of the resin mold 3 is equal to 3.6 mm, a thickness of the side window glass 2 is equal to 3.1 mm, and a thickness of the double-faced adhesive tape 6 is equal to 0.4 mm. As shown in FIG. 3, the double-faced adhesive tape 6 is stuck to the reverse surface of the side window glass 2 under a state where one end face of the double-faced adhesive tape 6 is located near an end face 36 of the lower portion (as viewed in FIG. 3) of the U-shaped portion of the resin mold 3 whereas another end face of the double-faced adhesive tape 6 is located away by some margin from an end of the side window glass 2 (i.e., is located to keep an end margin of the side window glass 2) so as to make it easy to insert the side window glass 2 into the U-shaped portion of the resin mold 3. Accordingly, an assembling workability between the resin mold 3 and the side window glass 2 can be improved. Moreover, the thermal stress which is caused in the resin mold 3 and the stress which is caused in the resin mold 3 due to the manufacturing errors of the resin mold 3 and the side window glass 2 can be sufficiently relaxed.

In a case that the double-faced adhesive tape 6 has been stuck to a portion of the side window glass 2 which is near an end face of the side window glass 2, the double-faced adhesive tape 6 sticks to the inner surface of the lower portion (as viewed in FIG. 3) of the U-shaped portion of the resin mold 3 near the end face 36 of the lower portion of the U-shaped portion when the side window glass 2 tries to be inserted into the U-shaped portion. As a result, this makes difficult to insert the side window glass 2 into the U-shaped portion of the resin mold 3. However, in the case that the double-faced adhesive tape 6 has been stuck to a portion of the side window glass 2 which is away from the end face of the side window glass 2 as the example of the present invention, the double-faced adhesive tape 6 can be prevented from being caught by the inner surface of the lower portion of the U-shaped portion 30 of the resin mold 3 in a process of inserting the side window glass 2 into the U-shaped portion 30 of the resin mold. Hence, the workability can be enhanced.

In a case that the thickness of the double-faced adhesive tape 6 was smaller than or equal to 0.2 mm, the stress which is caused in the resin mold 3 due to the manufacturing error between the resin mold 3 and the side window glass 2 and the thermal stress which is caused in the resin mold 3 were not sufficiently relaxed. On the other hand, in a case that the thickness of the double-faced adhesive tape 6 was larger than 0.4 mm, the workability of inserting the side window glass 2 into the U-shaped portion 30 of the resin mold became worse. Therefore, the example according to the present invention selects 0.4 mm as an optimum thickness of the double-faced adhesive tape 6.

Although the invention has been described above with reference to the certain preferable example (embodiment), the invention is not limited to this example. Various variations will be possible according to the present invention. For example, the window-glass attachment structure according to the present invention can be used for a case that a plurality of sides (two or more edges) of the side window glass are surrounded by a resin mold(s). Moreover, the window-glass attachment structure according to the present invention can be used for a lower side mold for a front glass, i.e., can be used for a case that a lower end portion of the front glass is sandwiched by a resin mold so that the front glass is bonded to a window frame portion of the vehicle by means of adhesive. Also in such cases, the resin mold can be prevented from cracking by the chemical stress cracking. As a matter of course, even if a component(s) of the adhesive for bonding the mold and the glass to each other has a risk of generating the chemical stress cracking, a crack of the resin mold due to the chemical stress cracking can be reduced in the case of the embodiment according to the present invention because the resin mold and the glass adhere to each other through the elastic sheet.

### EXPLANATION OF REFERENCE SIGNS

- 1: Automotive
- 2: Side window glass
- 2a: Front edge of side window glass
- 3: Resin mold
- 4: Dam rubber
- 5: Adhesive
- 6: Double-faced adhesive tape
- 10: Side window frame portion
- 11: Door
- 30: U-shaped portion of resin mold
- 30b: Opening width of U-shaped portion of resin mold
- 31: Outer surface of upper portion of U-shaped portion of resin mold
- 32: Inner surface of upper portion of U-shaped portion of resin mold
- 33: Inner surface of lateral portion of U-shaped portion of resin mold
- 34: Inner surface of lower portion of U-shaped portion of resin mold
- 35: Outer surface of lower portion of U-shaped portion of resin mold
- 36: End face of lower portion of U-shaped portion of resin mold

## Claims

1. An attachment structure for a window glass configured to be attached to a window frame portion of a vehicle, the structure comprising
an adhesive-flow-blocking member located between a resin mold attached to an end edge portion of the window glass, and an adhesive configured to bond the window glass to a body of the vehicle.

2. The attachment structure according to Claim 1, wherein
the adhesive-flow-blocking member is a dam rubber.

3. The attachment structure according to one of Claims 1 and 2, wherein
the attachment structure comprises an elastic sheet sandwiched between the resin mold and the end edge portion of the window glass, and
the resin mold and the end edge portion of the window glass adhere to each other through the elastic sheet.

4. The attachment structure according to one of Claims 1 to 3, wherein
the elastic sheet is a double-faced adhesive tape.
